# EUROPEAN PATENT SPECIFICATION

(11) **EP 4 036 031 B1**
(45) Date of publication and mention of the grant of the patent: **17.04.2024**
(21) Application number: 20864724.8
(22) Date of filing: 15.09.2020
(51) Int. Cl.: B65D 63/10, H01B 7/00, C09J 7/21

(54) **BINDING TAPE**
BINDEBAND
BANDE ADHÉSIVE

(30) Priority: 19.09.2019 JP 2019170770
(43) Date of publication of application: 03.08.2022
(73) Proprietor: Denka Company Limited, Tokyo 103-8338 (JP)
(72) Inventor: TATE, Yosuke, Tokyo 103-8338 (JP); KIMURA, Akiyoshi, Tokyo 103-8338 (JP); YAMAMOTO, Yoshiaki, Tokyo 103-8338 (JP); YOSHIMURA, Daisuke, Tokyo 103-8338 (JP)
(74) Representative: Vossius & Partner Patentanwälte Rechtsanwälte mbB
(86) International application number: PCT/JP2020/034848
(87) International publication number: WO 2021/054311

(56) References cited:
- WO-A1-95/18844
- WO-A1-98/58032
- WO-A1-2011/052595
- WO-A1-2011/136201
- WO-A1-2019/069577
- JP-A- H11 335 637
- JP-A- 2006 210 228
- JP-A- 2011 088 654
- JP-A- 2016 060 512

## Description

### TECHNICAL FIELD

The present invention relates to a binding tape.

### BACKGROUND ART

For automotive wiring, a so-called wire harness in which electrical cables are bundled into a predetermined shape by a binding tape or the like has been used conventionally. Such a wire harness is typically installed in an engine compartment or a confined hidden portion, such as a space between the body and the interior material, and vibrates along with vibrations of an engine or vibrations during driving to come into contact with the surrounding walls and so forth. Consequently, there is a problem of producing flapping and/or scratching sounds. Meanwhile, the diameter of a wire harness has been increasing with the spread of electric vehicles. Nevertheless, in view of the degree of freedom in design, there is a need for a wire harness that can be bent even in the state of being wrapped with a binding tape.

Many binding tapes for wire harnesses commonly use a polyvinyl chloride tape as a substrate, but such binding tapes are unsuitable for uses that require heat resistance, sound absorbing properties, and flexibility which allows bending. As a substitute for polyvinyl chloride, for example, Patent Literature (PTL) 1 describes an adhesive tape comprising a substrate layer of a nonwoven fabric prepared by adding a binder to a web which is consolidated mechanically or wet-laid. It is disclosed that flapping and/or scratching sounds can be reduced by using the adhesive tape since the nonwoven fabric acts as a cushion when a wire harness comes into contact with the surrounding walls and so forth.

Moreover, for example, PTL 2 discloses that a binding adhesive tape comprising an adhesive layer formed on one surface of a film substrate containing an aromatic vinyl elastomer, a styrene-based copolymer, and a styrene-based resin exhibits heat resistance and flexibility. Further, for example, PTL 3 describes excellent bendability of a protective tube for a wire harness, comprising a thermoplastic resin sheet having a tensile stress at 100% elongation of 50 MPa or less rolled in the circumferential direction.
PTL 4 discloses an adhesive cloth tape for binding wire harness.
PTL 5 discloses an adhesive tape used to bind wire harnesses.
PTL 6 discloses a method of noise control in which a conformable sheet material formed from an extensible web and an adhesive is inserted between components to prevent, reduce, or eliminate noise produced by the components.

### CITATION LIST

### PATENT LITERATURE

PTL 1: Japanese Unexamined Patent Application Publication (Translation of PCT Application) No. 2004-524376
PTL 2: Japanese Unexamined Patent Application Publication No. 2008-143976
PTL 3: Japanese Unexamined Patent Application Publication No. 2018-152983
PTL 4: JP H11 335637 A
PTL 5: WO 98/58032 A1
PTL 6: WO 95/18844 A1

### SUMMARY OF INVENTION

### TECHNICAL PROBLEM

A binding tape binds objects while being stretched in the tape longitudinal direction during the binding work and is thus required not to be broken in the longitudinal direction during the binding work. Moreover, since the tape needs to be cut at a desirable length when the binding work is completed, breakability in the tape transverse direction (width direction) is required as well.

An object of the present invention is to provide a binding tape that exhibits high sound absorbing performance and suppressed breaking of the tape during the binding work. In particular, the object is to provide a binding tape that has all of heat resistance, sound absorbing properties, breaking resistance in the tape longitudinal direction, and breakability in the tape transverse direction, which are useful as a binding tape for wire harnesses.

### SOLUTION TO PROBLEM

The present invention relates to a binding tape according to any one of claims 1 to 11 and a use according to claim 12.

### ADVANTAGEOUS EFFECTS OF INVENTION

According to the present invention, it is possible to provide a binding tape that exhibits high sound absorbing performance and suppressed breaking of the tape during the binding work. In particular, it is possible to provide a binding tape that has all of heat resistance, sound absorbing properties, breaking resistance in the tape longitudinal direction, and breakability in the tape transverse direction, which are useful as a binding tape for wire harnesses.

### DESCRIPTION OF EMBODIMENTS

### [Binding Tape]

The binding tape according to the present invention includes at least a substrate layer and an adhesive layer and may include other layers, such as an intermediate layer. The substrate layer is a nonwoven fabric. The adhesive layer contains an adhesive and is provided on at least either surface of the substrate layer. Here, the nonwoven fabric is formed from fibers consisting of a thermoplastic elastomer or fibers containing a thermoplastic elastomer and a polyolefin. Moreover, the nonwoven fabric has a tensile breaking strength in the tape longitudinal direction (A1) of 20 N/10 mm or more. The substrate layer has a thickness of 300 to 470 mm.

As a result of intensive studies, the present inventors found possible to provide a binding tape that exhibits high sound absorbing performance and suppressed breaking of the tape during the binding work by employing, as a substrate layer, a nonwoven fabric that is formed from fibers consisting of a thermoplastic elastomer or fibers containing a thermoplastic elastomer and a polyolefin and that has a tensile breaking strength in the tape longitudinal direction (A1) of 20 N/10 mm or more. By employing, as a substrate layer, a nonwoven fabric formed from fibers consisting of a thermoplastic elastomer or fibers containing a thermoplastic elastomer and a polyolefin, it is possible in the present invention to enhance impact mitigation properties of the nonwoven fabric and to exhibit high sound absorbing performance, for example, when a wire harness comes into contact with the surrounding walls and so forth. Moreover, when the nonwoven fabric has a tensile breaking strength in the tape longitudinal direction (A1) of 20 N/10 mm or more, it is possible to perform the binding work easily and reliably without breaking of the tape even when the tape is stretched in the tape longitudinal direction during the binding work.

As a preferable embodiment of the present invention, by employing a nonwoven fabric having a tensile breaking strength in the tape transverse direction (A2) of less than 20 N/10 mm, it is possible to cut the tape easily at a desirable length in the tape transverse direction (width direction) when the binding work is completed. Moreover, as another preferable embodiment of the present invention, when a ratio (A2/A1) of a tensile breaking strength in the tape transverse direction (A2) of the nonwoven fabric to a tensile breaking strength in the tape longitudinal direction (A1) of the nonwoven fabric is less than 0.8, it is possible to more preferably attain both breaking resistance in the tape longitudinal direction and breakability in the tape transverse direction. The binding tape according to the present invention is particularly useful as a binding tape for wire harnesses, in which high sound absorbing performance and suppressed breaking of the tape during the binding work are required. Hereinafter, the present invention will be described in detail.

### (Substrate Layer)

The substrate layer of the binding tape according to the present invention is a nonwoven fabric. The nonwoven fabric is formed from fibers consisting of a thermoplastic elastomer or fibers containing a thermoplastic elastomer and a polyolefin. In other words, the nonwoven fabric may be formed from thermoplastic elastomer fibers or may be formed from fibers that contain thermoplastic elastomer portions and portions other than thermoplastic elastomers.

A thermoplastic elastomer is an elastomer that exhibits rubber elasticity at room temperature and that has properties of softening upon heating to exhibit flowability and returning to the rubbery state by cooling. Examples of the thermoplastic elastomer include, but are not particularly limited to, olefin thermoplastic elastomers (TPO), urethane thermoplastic elastomers (TPU), styrene-based thermoplastic elastomers (TPS), ester thermoplastic elastomers, and polyamide thermoplastic elastomers (TPAE). These thermoplastic elastomers may be used alone or in combination.

Exemplary olefin thermoplastic elastomers (TPO) include an ethylene-propylene-diene rubber dispersed in polypropylene (PP + EPDM). Exemplary urethane thermoplastic elastomers (TPU) include polyester TPU and polyether TPU. Exemplary styrene-based thermoplastic elastomers (TPS) include styrene-ethylene-butylene-styrene block copolymer (SEBS), styrene-butadiene-styrene block copolymer (SBS), styrene-ethylene-propylene-styrene block copolymer (SEPS), and styrene-isoprene-styrene block copolymer (SIS). Exemplary ester thermoplastic elastomers include polyether/ester-polyester block copolymers (TPC-EE), polyether/ester block copolymers (TPC-ET), and polyester block copolymers (TPC-ES). Exemplary polyamide thermoplastic elastomers (TPAE) include polyamide-polyether/ester-polyester block copolymers (TPA-EE), polyamide-polyester block copolymers (TPA-ES), and polyamide-polyether/ester block copolymers (TPA-ET).

The fibers that form the nonwoven fabric consist of the thermoplastic elastomer or contain a polyolefin in addition to the thermoplastic elastomer. In particular, the fibers that form the nonwoven fabric preferably further contain a polyolefin in addition to the thermoplastic elastomer from a viewpoint of enhancing the strength.

When the fibers that form the nonwoven fabric contain a thermoplastic elastomer and a polyolefin, the mass proportion of the thermoplastic elastomer relative to the mass of the fibers (100 mass%) is preferably 1 mass% or more and more preferably 3 mass% or more from a viewpoint of improving sound absorbing properties. The upper limit of the proportion is not particularly limited but may be 90 mass% or less or 80 mass% or less, for example.

The nonwoven fabric may further include other fibers that do not contain a thermoplastic elastomer in addition to the fibers containing a thermoplastic elastomer. Examples of other fibers include, but are not particularly limited to, polyolefin fibers, such as polyethylene and polypropylene, aramid fibers, glass fibers, cellulose fibers, nylon fibers, vinylon, polyester fibers, and rayon fibers. These other fibers may be used alone or in combination. For example, the nonwoven fabric may be blended fibers of polyolefin fibers as other fibers and the fibers containing a thermoplastic elastomer.

When the nonwoven fabric include the fibers containing a thermoplastic elastomer and the above-mentioned other fibers, the mass proportion of the fibers containing a thermoplastic elastomer relative to the mass of all the fibers (100 mass%) is preferably 80 mass% or more and more preferably 90 mass% or more from a viewpoint of improving sound absorbing properties. Alternatively, the nonwoven fabric may be formed solely from the fibers consisting of a thermoplastic elastomer.

In view of strength and flexibility, the fibers that constitute the nonwoven fabric have a fiber diameter of preferably 1 to 40 µm and more preferably 5 to 30 µm. When the fiber diameter is 1 µm or more, the nonwoven fabric readily attains a tensile breaking strength in the tape longitudinal direction (A1) of 20 N/10 mm or more. Meanwhile, when the fiber diameter is 40 µm or less, flexibility during binding is readily attained. Here, the fiber diameter is an average for the diameters of arbitrary 10 fibers measured on an enlarged image of ×500 taken under a microscope.

In the present invention, the nonwoven fabric has a tensile breaking strength in the tape longitudinal direction (A1) of 20 N/10 mm or more. When the tensile breaking strength (A1) is 20 N/10 mm or more, breaking in the tape longitudinal direction is suppressed during the binding work. Herein, "the tape longitudinal direction" is the tape length direction, in other words, the direction in which the tape is pulled out, and "the tape longitudinal direction of the nonwoven fabric" is the machine direction (lengthwise direction) of the nonwoven fabric. The tensile breaking strength (A1) is preferably 22 N/10 mm or more, more preferably 24 N/10 mm or more, and further preferably 25 N/10 mm or more. The upper limit of the tensile breaking strength (A1) is preferably less than 40 N/10 mm, more preferably 37 N/10 mm or less, and further preferably 35 N/10 mm or less in view of easy cutting of the tape at a desirable length in the tape transverse direction (width direction).

The nonwoven fabric preferably has a tensile breaking strength in the tape transverse direction (A2) of less than 20 N/10 mm. When the tensile breaking strength (A2) is less than 20 N/10 mm, it is possible to easily cut the tape at a desirable length in the tape transverse direction when the binding work is completed. Herein, "the tape transverse direction" is the tape width direction, in other words, a direction perpendicular to the direction in which the tape is pulled out, and "the tape transverse direction of the nonwoven fabric" is the transverse direction (cross direction) of the nonwoven fabric. The tensile breaking strength (A2) is more preferably 18 N/10 mm or less and further preferably 16 N/10 mm or less. The lower limit of the tensile breaking strength (A2) is preferably 1 N/10 mm or more, more preferably 1.5 N/10 mm or more, and further preferably 2 N/10 mm or more from a viewpoint of preventing splitting of the tape upon bending of the resulting bound article. In the present invention, the tensile breaking strength (A1) and (A2) is the strength when a test piece having a width of 10 mm and a gap between gauge lines of 100 mm is broken by pulling at a rate of 300 mm/min under the environment of a temperature of 23°C and a relative humidity of 50% according to section 8 of JIS Z 0237 (2009) (ISO 29864: 2007).

A ratio (A2/A1) of the tensile breaking strength (A2) to the tensile breaking strength (A1) is preferably less than 0.8. When the ratio (A2/A1) is less than 0.8, it is possible to more preferably attain both breaking resistance in the tape longitudinal direction and breakability in the tape transverse direction. To further enhance breakability in the tape transverse direction, the ratio (A2/A1) is more preferably 0.7 or less and further preferably 0.6 or less. The lower limit of the ratio (A2/A1) is not particularly limited but may be 0.01 or more, for example.

The nonwoven fabric preferably has a tensile elongation at break in the tape longitudinal direction (B1) of 100 to 295%. When the tensile elongation at break (B1) is 100% or more, the resulting bound article exhibits satisfactory bendability. Meanwhile, when the tensile elongation at break (B1) is 295% or less, it is possible to retain breakability in the tape transverse direction. The tensile elongation at break (B1) is more preferably 150 to 290% and further preferably 180 to 280%.

The nonwoven fabric preferably has a tensile elongation at break in the tape transverse direction (B2) of 100 to 400%. When the tensile elongation at break (B2) is 100% or more, the resulting bound object exhibits satisfactory bendability. Meanwhile, when the tensile elongation at break (B2) is 400% or less, it is possible to retain breakability in the tape transverse direction. The tensile elongation at break (B2) is more preferably 120 to 370% and further preferably 140 to 350%. In the present invention, the tensile elongation at break (B1) and (B2) is the elongation when a test piece having a width of 10 mm and a gap between gauge lines of 100 mm is broken by pulling at a rate of 300 mm/min under the environment of a temperature of 23°C and a relative humidity of 50% according to section 8 of JIS Z 0237 (2009) (ISO 29864: 2007).

A ratio (B2/B1) of the tensile elongation at break (B2) to the tensile elongation at break (B1) is preferably 0.1 to 2. The ratio (B2/B1) is more preferably 0.3 to 1.5 and further preferably 0.5 to 1.3.

The nonwoven fabric preferably has a tensile elastic modulus in the tape longitudinal direction (C1) of less than 1 MPa. When the tensile elastic modulus (C1) is less than 1 MPa, high sound absorbing performance is attained. The tensile elastic modulus (C1) is more preferably 0.8 MPa or less and further preferably 0.6 MPa or less. The lower limit of the tensile elastic modulus (C1) is preferably 0.005 MPa or more, more preferably 0.007 MPa or more, and further preferably 0.01 MPa or more in view of breaking resistance in the tape longitudinal direction. In the present invention, the tensile elastic modulus (C1) is a value calculated by linear regression of tensile stress to strain ratios at a strain of 5 to 10% in the above-mentioned measurement of the tensile elongation at break (B1) and (B2).

The nonwoven fabric preferably has a basis weight of 50 to 200 g/m². When the basis weight is 50 g/m² or more, breaking resistance in the tape longitudinal direction is readily attained. Meanwhile, when the basis weight is 200 g/m² or less, flexibility during binding is readily attained. The basis weight is more preferably 70 to 180 g/m² and further preferably 90 to 160 g/m².

The thickness of the substrate layer, in other words, the thickness of the nonwoven fabric is 300 to 470 µm. When the thickness is 300 µm or more, high sound absorbing performance is attained. Meanwhile, when the thickness is 470 µm or less, flexibility after binding is readily attained while retaining cushioning properties. The thickness is more preferably 350 to 450 µm. In the present invention, the thickness of each layer and the entire tape is obtained by calculating an average for thicknesses at three points measured using a dial gauge specified in JIS B 7503.

The nonwoven fabric is not particularly limited, but nonwoven fabrics prepared by a spunbond process, spunlacing process, or melt blowing process, for example, may be used. Among these, nonwoven fabrics prepared by a spunbond process are preferably used in view of mechanical strength. The nonwoven fabric may be a single layer or may be a laminated nonwoven fabric consisting of a plurality of layers. A laminated nonwoven fabric may be formed by stacking nonwoven fabrics prepared by a plurality of processes.

### (Adhesive Layer)

The adhesive layer according to the present invention contains an adhesive and is provided on at least either surface of the substrate layer. The adhesive is not particularly limited provided that the effects of the present invention are exhibited, and adhesives conventionally used for binding tapes may be used appropriately. Exemplary adhesives include acrylic adhesives, rubber adhesives, silicone adhesives, and urethane adhesives. Among these adhesives, acrylic adhesives are preferable as the adhesive in view of heat resistance and controlled adhesive strength.

Exemplary acrylic adhesives include adhesives that contain an acrylic polymer as a main component. Exemplary acrylic polymers include polymers of (meth)acrylic acid alkyl esters and carboxy group-containing unsaturated monomers. Herein, "(meth)acrylic acid" means acrylic acid and methacrylic acid.

Exemplary (meth)acrylic acid alkyl esters include methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, isobutyl acrylate, isobutyl methacrylate, sec-butyl acrylate, sec-butyl methacrylate, tert-butyl acrylate, tert-butyl methacrylate, 2-ethylhexyl acrylate, 2-ethylhexyl methacrylate, n-octyl acrylate, n-octyl methacrylate, isooctyl acrylate, isooctyl methacrylate, n-nonyl acrylate, n-nonyl methacrylate, isononyl acrylate, and isononyl methacrylate. These may be used alone or in combination.

The carboxy group-containing unsaturated monomers are those copolymerizable with the above-mentioned (meth)acrylic acid alkyl esters and are not particularly limited provided that the effects of the present invention are exhibited. Examples include acrylic acid, methacrylic acid, itaconic acid, fumaric acid, and maleic acid. These may be used alone or in combination.

The acrylic polymers may be copolymers that contain other monomers excluding (meth)acrylic acid alkyl esters and carboxy group-containing unsaturated monomers as illustrated above.

Exemplary other monomers include hydroxy group-containing monomers, such as 2-hydroxyethyl (meth)acrylate, 2-hydroxypropyl (meth)acrylate, and hydroxyhexyl (meth)acrylate; N-containing (meth)acrylates, such as (meth)acrylamide, acryloylmorpholine, and (meth)acrylonitrile; vinyl acetate; styrene; vinylidene chloride; and vinyl propionate. These may be used alone or in combination.

When an acrylic adhesive that contain an acrylic polymer is used as the adhesive, the acrylic polymer is preferably crosslinked from a viewpoint of preventing the phenomenon (strike-through) in which a low-molecular-weight component contained in the acrylic adhesive penetrates a nonwoven fabric as a substrate layer. Exemplary methods of crosslinking an acrylic polymer include a method of irradiating with active energy rays (UV, electron beams, and so forth) and a method of adding an appropriate crosslinker.

Examples of the appropriate crosslinker include epoxy crosslinkers, polyfunctional isocyanate crosslinkers, melamine resin-based crosslinkers, metal salt crosslinkers, metal chelate crosslinkers, amino resin crosslinkers, and peroxide crosslinkers. These may be used alone or in combination.

Exemplary rubber adhesives include adhesives that contain at least one rubber component selected from the group consisting of natural rubber, styrene-isoprene-styrene block copolymer (SIS), styrene-butadiene-styrene block copolymer (SBS), hydrogenated styrene-based block copolymers thereof (SIPS, SEBS), styrene-butadiene rubber (SBR), polyisoprene rubber (IR), polyisobutylene (PIB), butyl rubber (IIR), and so forth; and at least one tackifier that is appropriately blended therewith and that is selected from the group consisting of rosin resins, terpene resins, petroleum resins, and so forth.

Exemplary silicone adhesives include adhesives of silicone rubber appropriately blended with a silicone resin, a silicone oil, or the like.

Exemplary urethane adhesives include polyurethanes obtained by reacting polyols, such as polyether polyols and polyester polyols, with polyisocyanates, such as tolylene diisocyanate (TDI), diphenylmethane diisocyanate (MDI), hexamethylene diisocyanate (HDI), and xylylene diisocyanate (XDI).

The adhesive layer may contain an appropriate additive in addition to the adhesive. Exemplary additives include softening agents, tackifiers, surface lubricants, leveling agents, antioxidants, corrosion inhibitors, light stabilizers, UV absorbers, heat stabilizers, polymerization inhibitors, silane coupling agents, glidants, inorganic or organic fillers, metal powder, and pigments. These may be used alone or in combination.

Exemplary tackifiers include petroleum resins, such as aliphatic copolymers, aromatic copolymers, aliphatic/aromatic copolymers, and alicyclic copolymers; coumarone-indene resins; terpene resins; terpene phenolic resins; rosin resins, such as polymerized rosin; (alkyl) phenolic resins; xylene-based resins; and hydrogenated products thereof. These may be used alone or in combination.

The thickness of the adhesive layer is not particularly limited provided that the effects of the present invention are exhibited but is preferably 5 to 100 µm and more preferably 10 to 70 µm, for example. Moreover, the adhesive layer may be a single layer or may be formed from a plurality of layers. When the adhesive layer is formed from a plurality of layers, the thickness of each layer is preferably adjusted such that the total thickness of the adhesive layer falls within the above-mentioned ranges. Further, the adhesive layer may be provided on either surface or on both surfaces of the substrate layer.

### (Intermediate Layer)

The binding tape according to the present invention may include an intermediate layer between the substrate layer and the adhesive layer. The intermediate layer is not particularly limited provided that the effects of the present invention are exhibited, and various films or cloth, for example, may be used therefor.

### (Binding Tape Thickness)

The thickness of the binding tape according to the present invention is not particularly limited but is preferably 300 to 600 µm and more preferably 300 to 500 µm, for example. When the thickness is 300 µm or more, high sound absorbing performance is attained. Meanwhile, when the thickness is 600 µm or less, flexibility after binding is readily attained while retaining impact mitigation properties.

### (Sound Absorbing Properties)

The binding tape according to the present invention has a damping value measured by the following method for evaluating sound absorbing properties of preferably 5.5 dB or more, more preferably 5.7 dB or more, and further preferably 6 dB or more. When the damping value is 5.5 dB or more, the binding tape exhibits satisfactory sound absorbing properties even when used as a binding tape particularly for wire harnesses.

### < Method for Evaluating Sound Absorbing Properties >

A damping value was calculated after testing by the same method as for "acoustic insulators" in Section 5.5.5 of LV312-1, which is an integrated standard among German automakers. Specifically, an aluminum sheet having a thickness of 0.3 mm and a size of 350 mm × 190 mm was bent into a semicircular shape of 290 mm in diameter. Next, a steel rod of 8 mm in diameter was dropped at a load of 0.16 N from the position 20 mm above the apex of the aluminum sheet. The noise (unit: dB) upon impact was measured by a microphone set 50 mm above the impact position. In addition to the noise measured for the steel rod alone, noise was measured after attaching a layer of an adhesive tape sample (size of 25 mm × 50 mm) to the impact position of the steel rod. The difference in noise was regarded as a damping value.

### (Uses)

The binding tape according to the present invention exhibits high sound absorbing performance and can suppress breaking of the tape during the binding work. For this reason, the binding tape can suitably be used in the field in which such performance is required, for example, as a binding tape for wire harnesses of automobiles and so forth. However, the binding tape of the present embodiment is naturally not limited to the uses for wire harnesses.

### (Another Embodiment)

Another embodiment of the binding tape according to the present application but not according to the claimed invention is a binding tape including a substrate layer of a nonwoven fabric and an adhesive layer that contains an adhesive and that is provided on at least either surface of the substrate layer, where: the nonwoven fabric has a tensile breaking strength in the tape longitudinal direction (A1) of 20 N/10 mm or more and less than 40 N/10 mm; and a damping value measured by the foregoing method for evaluating sound absorbing properties is 5.5 dB or more. The present embodiment can also attain high sound absorbing performance and the effects of suppressing breaking of the tape during the binding work based on the tensile breaking strength (A1).

### [Method for Producing Binding Tape]

The method for producing the binding tape according to the present invention is not particularly limited, and examples include a method of forming an adhesive layer by applying an adhesive directly to the substrate layer and a method of transferring an adhesive that has temporarily been applied to another sheet to the substrate layer. Exemplary methods for applying an adhesive to the substrate layer or another sheet include a roll coating method, a spray coating method, a gravure coating method, a reverse coating method, a rod coating method, a bar coating method, a die coating method, a kiss coating method, a reverse kiss coating method, and an air knife coating method.

### EXAMPLES

Hereinafter, the present invention will be described in detail by means of working examples. However, the present invention is by no means limited by the following description. Here, the sound absorbing properties of a binding tape obtained in each Example and Comparative Example were evaluated by the foregoing method. Further, the binding properties and hand tearability of the binding tape were evaluated by the following methods.

### [Binding Properties]

Each binding tape was subjected to the binding work of wrapping around, in a half-lapped manner, a 50 cm section of an electrical cable bundle of about 10 mm in outer diameter, which consists of 19 electrical cables having an outer diameter of 2 mm. The binding properties of the binding tape were evaluated by the following criteria.
○: No breaking of binding tape during binding work
×: Breaking of binding tape during binding work

### [Hand Tearability]

A hand tearability test was performed by tearing each binding tape by hands in the transverse direction. Hand tearability was evaluated by the following criteria. Here, when evaluated as "○" or "Δ," the binding tape can be used without practical problems.
○: Binding tape can be easily torn by hands in tape transverse direction
Δ: Binding tape can be torn by hands in tape transverse direction
×: Binding tape is difficult to tear by hands in tape transverse direction

### [Example 1]

As a substrate layer, prepared was nonwoven fabric A (fibers: TPO) shown in Table 1 having a basis weight of 150 g/m² formed by a spunbond process using, as a raw material, an olefin thermoplastic elastomer of an ethylene-propylene-diene rubber dispersed in polypropylene (TPO, trade name: "Fulxus^{®} FX-TPO-J160" from Nishida Giken Co., Ltd.). Meanwhile, an emulsion of an acrylic adhesive was prepared by adding 1 part by mass of an epoxy curing agent (trade name: "Tetrad^{®}-C" from Mitsubishi Gas Chemical Company, Inc.) to 100 parts by mass of a water-soluble acrylic ester emulsion (trade name: "Acryset^{®} SKE-4851" from Nippon Shokubai Co., Ltd.). The emulsion was applied at an amount of 40 g/m² as solids content to a silicone release paper (trade name: "KP-8" from Lintec Corporation) and then transferred to the surface of nonwoven fabric A to form an adhesive layer, thereby obtaining a binding tape having a thickness of 420 µm. The sound absorbing properties, binding properties, and hand tearability of the obtained binding tape were evaluated by the foregoing methods. The results are shown in Table 2.

### [Example 2]

As a substrate layer, used was nonwoven fabric B (fibers: PP + TPU) shown in Table 1 having a basis weight of 100 g/m² formed by a spunbond process using, as raw materials, 95 mass% of polypropylene (PP, trade name: "Moplen^{®} HP461Y" from LyondellBasell Industries Holdings B.V.) and 5 mass% of a polyester-urethane thermoplastic elastomer (TPU: trade name "Elastollan° ET690" from BASF SE). Except for this, a binding tape was produced and evaluated in the same manner as Example 1. The results are shown in Table 2.

### [Example 3]

As a substrate layer, used was nonwoven fabric C (fibers: PP + TPS) shown in Table 1 having a basis weight of 150 g/m² formed by a spunbond process using, as raw materials, 95 mass% of polypropylene (PP, trade name: "Moplen^{®} HP461Y" from LyondellBasell Industries Holdings B.V.) and 5 mass% of styrene-ethylene-butylene-styrene block copolymer (trade name "Kraton^{®} G1633E" from Kraton Polymers LLC) as a styrene-based thermoplastic elastomer (TPS). Except for this, a binding tape was produced and evaluated in the same manner as Example 1. The results are shown in Table 2.

### [Example 4]

As a substrate layer, used was nonwoven fabric D (fibers: PP + TPAE) shown in Table 1 having a basis weight of 120 g/m² formed by a spunbond process using, as raw materials, 95 mass% of polypropylene (PP, trade name: "Moplen^{®} HP461Y" from LyondellBasell Industries Holdings B.V.) and 5 mass% of a polyamide-polyether/ester-polyester block copolymer (trade name "TPAE-10" from T&K Toka Co. Ltd.) as a polyamide thermoplastic elastomer (TPAE). Except for this, a binding tape was produced and evaluated in the same manner as Example 1. The results are shown in Table 2.

### [Comparative Example 1]

As a substrate layer, used was nonwoven fabric E (fibers: PP + TPU) shown in Table 1 having a basis weight of 72 g/m² formed by a spunbond process using, as raw materials, 95 mass% of polypropylene (PP, trade name: "Moplen^{®} HP461Y" from LyondellBasell Industries Holdings B.V.) and 5 mass% of a polyester-urethane thermoplastic elastomer (TPU: trade name "Elastollan^{®} ET690" from BASF SE). Except for this, a binding tape was produced and evaluated in the same manner as Example 1. The results are shown in Table 2.

### [Comparative Example 2]

As a substrate layer, used was nonwoven fabric F (fibers: PP + TPS) shown in Table 1 having a basis weight of 45 g/m² formed by a spunbond process using, as raw materials, 95 mass% of polypropylene (PP, trade name: "Moplen^{®} HP461Y" from LyondellBasell Industries Holdings B.V.) and 5 mass% of styrene-ethylene-butylene-styrene block copolymer (trade name "Kraton^{®} G1633E" from Kraton Polymers LLC) as a styrene-based thermoplastic elastomer (TPS). Except for this, a binding tape was produced and evaluated in the same manner as Example 1. The results are shown in Table 2.

### [Comparative Example 3]

As a substrate layer, used was nonwoven fabric G (fibers: PP + TPS) shown in Table 1 having a basis weight of 70 g/m² formed by a spunbond process using, as raw materials, 95 mass% of polypropylene (PP, trade name: "Moplen^{®} HP461Y" from LyondellBasell Industries Holdings B.V.) and 5 mass% of styrene-ethylene-butylene-styrene block copolymer (trade name "Kraton^{®} G1633E" from Kraton Polymers LLC) as a styrene-based thermoplastic elastomer (TPS). Except for this, a binding tape was produced and evaluated in the same manner as Example 1. The results are shown in Table 2.

### [Comparative Example 4]

As a substrate layer, used was nonwoven fabric H (fibers: PP + TPS) shown in Table 1 having a basis weight of 100 g/m² formed by a spunbond process using, as raw materials, 95 mass% of polypropylene (PP, trade name: "Moplen^{®} HP461Y" from LyondellBasell Industries Holdings B.V.) and 5 mass% of styrene-ethylene-butylene-styrene block copolymer (trade name "Kraton^{®} G1633E" from Kraton Polymers LLC) as a styrene-based thermoplastic elastomer (TPS). Except for this, a binding tape was produced and evaluated in the same manner as Example 1. The results are shown in Table 2.

### [Comparative Example 5]

Except for using stitchbond nonwoven fabric I formed from PET fibers shown in Table 1 as a substrate layer, a binding tape was produced and evaluated in the same manner as Example 1. The results are shown in Table 2.

**[Table 1]**

| Nonwoven fabric | | | A | B | C | D | E | F | G | H | I |
|---|---|---|---|---|---|---|---|---|---|---|---|
| Fiber | | | TPO | PP + TPU | PP + TPS | PP + TPAE | PP + TPU | PP + TPS | PP + TPS | PP + TPS | PET |
| Fiber diameter | | µm | 16 | 18 | 16 | 15 | 18 | 16 | 16 | 16 | 7 |
| Production process | | | Spunbond | | | | | | | | Stitchbond |
| Tensile breaking strength | A1 | N/10 mm | 26.7 | 25.5 | 31.4 | 23.4 | 12.6 | 16.6 | 13.3 | 15.6 | 40.0 |
| | A2 | N/10 mm | 15.2 | 2.5 | 9.8 | 18.2 | 4.4 | 2.0 | 4.2 | 6.2 | - |
| | A2/A1 | - | 0.57 | 0.10 | 0.31 | 0.78 | 0.35 | 0.12 | 0.32 | 0.40 | - |
| Tensile elongation at break | B1 | % | 197 | 210 | 277 | 185 | 223 | 100 | 127 | 73 | 43 |
| | B2 | % | 240 | 210 | 313 | 200 | 180 | 277 | 210 | 203 | - |
| | B2/B1 | - | 1.22 | 1.00 | 1.13 | 1.08 | 0.81 | 2.77 | 1.65 | 2.78 | - |
| Tensile elastic modulus | C1 | MPa | 0.09 | 0.01 | 0.59 | 0.31 | 0.26 | 0.86 | 0.70 | 0.69 | 1.00 |
| Basis weight | | g/m² | 150 | 100 | 150 | 120 | 72 | 45 | 70 | 100 | 85 |
| Thickness | | µm | 413 | 363 | 375 | 385 | 281 | 121 | 178 | 253 | 280 |

**[Table 2]**

| | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 |
|---|---|---|---|---|---|---|---|---|---|
| Nonwoven fabric | A | B | C | D | E | F | G | H | I |
| Sound absorbing properties [damping value (dB)] | 6.4 | 5.5 | 5.5 | 5.6 | 5.2 | 3.6 | 3.6 | 5.0 | 3.8 |
| Binding properties | ○ | ○ | ○ | ○ | × | × | × | × | ○ |
| Hand tearability | ○ | ○ | ○ | Δ | ○ | ○ | ○ | ○ | ○ |

The binding tapes of Examples 1 to 4 using nonwoven fabrics A to D as a substrate layer exhibited satisfactory binding properties and high sound absorbing performance. In particular, the binding tapes of Examples 1 to 3 using nonwoven fabrics A to C as a substrate layer exhibited satisfactory hand tearability as well. This is presumably because nonwoven fabrics A to C have A2/A1 of less than 0.8 and thus have low tensile breaking strength in the tape transverse direction relative to the tape longitudinal direction.

In contrast, the binding tapes of Comparative Examples 1 to 4 using nonwoven fabrics E to H as a substrate layer exhibited binding properties and sound absorbing performance inferior to the binding tapes of Examples 1 to 4. Moreover, the binding tape of Comparative Example 5 using nonwoven fabric I as a substrate layer exhibited satisfactory binding properties but low sound absorbing performance. This is presumably because the fibers that constitute the nonwoven fabric are PET fibers.

## Claims

1. A binding tape comprising
a substrate layer of a nonwoven fabric and
an adhesive layer that contains an adhesive and that is provided on at least either surface of the substrate layer, wherein:
the nonwoven fabric is formed from fibers consisting of a thermoplastic elastomer or fibers containing a thermoplastic elastomer and a polyolefin;
the nonwoven fabric has a tensile breaking strength in the tape longitudinal direction (A1) of 20 N/10 mm or more, wherein the tensile breaking strength is measured as described in the description, and
the substrate layer has a thickness of 300 to 470 µm, wherein the thickness is measured as described in the description.

2. The binding tape according to Claim 1, wherein the thermoplastic elastomer is at least one selected from the group consisting of olefin thermoplastic elastomers, urethane thermoplastic elastomers, styrene-based thermoplastic elastomers, ester thermoplastic elastomers, and polyamide thermoplastic elastomers.

3. The binding tape according to any one of Claims 1 to 2, wherein the nonwoven fabric has a tensile breaking strength in the tape longitudinal direction (A1) of less than 40 N/10 mm, wherein the tensile breaking strength is measured as described in the description.

4. The binding tape according to any one of Claims 1 to 3, wherein the nonwoven fabric has a tensile breaking strength in the tape transverse direction (A2) of less than 20 N/10 mm, wherein the tensile breaking strength is measured as described in the description.

5. The binding tape according to any one of Claims 1 to 4, wherein a ratio (A2/A1) of a tensile breaking strength in the tape transverse direction (A2) of the nonwoven fabric to a tensile breaking strength in the tape longitudinal direction (A1) of the nonwoven fabric is less than 0.8, wherein the tensile breaking strength is measured as described in the description.

6. The binding tape according to any one of Claims 1 to 5, wherein the nonwoven fabric has a tensile elongation at break in the tape longitudinal direction (B1) of 100 to 295%, wherein the tensile elongation at break is measured as described in the description.

7. The binding tape according to any one of Claims 1 to 6, wherein the nonwoven fabric has a tensile elongation at break in the tape transverse direction (B2) of 100 to 400%, wherein the tensile elongation at break is measured as described in the description.

8. The binding tape according to any one of Claims 1 to 7, wherein a ratio (B2/B1) of a tensile elongation at break in the tape transverse direction (B2) of the nonwoven fabric to a tensile elongation at break in the tape longitudinal direction (B1) of the nonwoven fabric is 0.1 to 2, wherein the tensile elongation at break is measured as described in the description.

9. The binding tape according to any one of Claims 1 to 8, wherein the nonwoven fabric has a tensile elastic modulus in the tape longitudinal direction (C1) of less than 1 MPa, wherein the tensile elastic modulus is measured as described in the description.

10. The binding tape according to any one of Claims 1 to 9, wherein the nonwoven fabric has a basis weight of 50 to 200 g/m².

11. The binding tape according to any one of Claims 1 to 10, wherein a damping value measured by the following method for evaluating sound absorbing properties is 5.5 dB or more.
(Method for Evaluating Sound Absorbing Properties)
A damping value was calculated after testing by the same method as for "acoustic insulators" in Section 5.5.5 of LV312-1, which is an integrated standard among German automakers. Specifically, an aluminum sheet having a thickness of 0.3 mm and a size of 350 mm × 190 mm was bent into a semicircular shape of 290 mm in diameter. Next, a steel rod of 8 mm in diameter was dropped at a load of 0.16 N from the position 20 mm above the apex of the aluminum sheet. The noise (unit: dB) upon impact was measured by a microphone set 50 mm above the impact position. In addition to the noise measured for the steel rod alone, noise was measured after attaching a layer of an adhesive tape sample (size of 25 mm × 50 mm) to the impact position of the steel rod. The difference in noise was regarded as a damping value.

12. Use of a binding tape according to any one of Claims 1 to 11 for a wire harness.

## Patentansprüche

1. Ein Bindeband, umfassend
eine Substratschicht aus einem Vliesstoff und
eine Klebstoffschicht, die einen Klebstoff enthält und die auf mindestens einer Oberfläche der Substratschicht vorgesehen ist, wobei:
der Vliesstoff aus Fasern, die aus einem thermoplastischen Elastomer bestehen, oder Fasern, die ein thermoplastisches Elastomer und ein Polyolefin enthalten, gebildet ist;
der Vliesstoff eine Zugfestigkeit beim Bruch in der Bandlängsrichtung (A1) von 20 N/10 mm oder mehr aufweist, wobei die Zugfestigkeit beim Bruch wie in der Beschreibung beschrieben gemessen wird, und
die Substratschicht eine Dicke von 300 bis 470 µm aufweist, wobei die Dicke wie in der Beschreibung beschrieben gemessen wird.

2. Das Bindeband nach Anspruch 1, wobei das thermoplastische Elastomer mindestens eines, ausgewählt aus der Gruppe bestehend aus thermoplastischen Olefin-Elastomeren, thermoplastischen Urethan-Elastomeren, thermoplastischen Elastomeren auf Styrolbasis, thermoplastischen Ester-Elastomeren und thermoplastischen Polyamid-Elastomeren, ist.

3. Das Bindeband nach einem der Ansprüche 1 bis 2, wobei der Vliesstoff eine Zugfestigkeit beim Bruch in der Bandlängsrichtung (A1) von weniger als 40 N/10 mm aufweist, wobei die Zugfestigkeit beim Bruch wie in der Beschreibung beschrieben gemessen wird.

4. Das Bindeband nach einem der Ansprüche 1 bis 3, wobei der Vliesstoff eine Zugfestigkeit beim Bruch in der Bandquerrichtung (A2) von weniger als 20 N/10 mm aufweist, wobei die Zugfestigkeit beim Bruch wie in der Beschreibung beschrieben gemessen wird.

5. Das Bindeband nach einem der Ansprüche 1 bis 4, wobei ein Verhältnis (A2/A1) einer Zugfestigkeit beim Bruch in der Bandquerrichtung (A2) des Vliesstoffs zu einer Zugfestigkeit beim Bruch in der Bandlängsrichtung (A1) des Vliesstoffes kleiner als 0,8 ist, wobei die Zugfestigkeit beim Bruch wie in der Beschreibung beschrieben gemessen wird.

6. Das Bindeband nach einem der Ansprüche 1 bis 5, wobei der Vliesstoff eine Zugdehnung beim Bruch in der Bandlängsrichtung (B1) von 100 bis 295% aufweist, wobei die Zugdehnung beim Bruch wie in der Beschreibung beschrieben gemessen wird.

7. Das Bindeband nach einem der Ansprüche 1 bis 6, wobei der Vliesstoff eine Zugdehnung beim Bruch in der Bandquerrichtung (B2) von 100 bis 400% aufweist, wobei die Zugdehnung beim Bruch wie in der Beschreibung beschrieben gemessen wird.

8. Das Bindeband nach einem der Ansprüche 1 bis 7, wobei das Verhältnis (B2/B1) der Zugdehnung beim Bruch in der Bandquerrichtung (B2) des Vliesstoffes zu einer Zugdehnung beim Bruch in der Bandlängsrichtung (B1) des Vliesstoffes 0,1 bis 2 beträgt, wobei die Zugdehnung beim Bruch wie in der Beschreibung beschrieben gemessen wird.

9. Das Bindeband nach einem der Ansprüche 1 bis 8, wobei der Vliesstoff einen Zug-Elastizitätsmodul in der Bandlängsrichtung (C1) von weniger als 1 MPa aufweist, wobei der Zug-Elastizitätsmodul wie in der Beschreibung beschrieben gemessen wird.

10. Das Bindeband nach einem der Ansprüche 1 bis 9, wobei der Vliesstoff ein Flächengewicht von 50 bis 200 g/m² aufweist.

11. Das Bindeband nach einem der Ansprüche 1 bis 10, wobei ein Dämpfungswert, gemessen durch das folgende Verfahren zur Beurteilung der schallabsorbierenden Eigenschaften, 5,5 dB oder mehr beträgt.
(Verfahren zur Beurteilung der schallabsorbierenden Eigenschaften)
Ein Dämpfungswert wurde nach der Prüfung durch das gleiche Verfahren wie für "akustische Isolatoren" in Abschnitt 5.5.5 der LV312-1, bei der es sich um eine integrierte Norm der deutschen Automobilhersteller handelt, berechnet. Konkret wurde ein Aluminiumblech mit einer Dicke von 0,3 mm und einer Größe von 350 mm × 190 mm in eine halbkreisförmige Form mit einem Durchmesser von 290 mm gebogen. Anschließend wurde eine Stahlstange mit einem Durchmesser von 8 mm mit einer Last von 0,16 N aus einer Position 20 mm oberhalb des Scheitelpunkts des Aluminiumblechs fallen gelassen. Das Geräusch (Einheit: dB) beim Aufprall wurde mit einem Mikrofon gemessen, das 50 mm oberhalb der Aufprallstelle angebracht war. Zusätzlich zu dem für die Stahlstange allein gemessenen Geräusch wurde das Geräusch gemessen, nachdem eine Schicht einer Klebebandprobe (Größe 25 mm x 50 mm) an der Aufprallstelle der Stahlstange angebracht worden war. Der Unterschied im Geräusch wurde als Dämpfungswert betrachtet.

12. Verwendung eines Bindebandes nach einem der Ansprüche 1 bis 11 für einen Kabelbaum.

## Revendications

1. Bande de liage comprenant
une couche de substrat d'un tissu non tissé et
une couche adhésive qui contient un adhésif et qui est disposée sur au moins l'une ou l'autre surface de la couche de substrat, dans laquelle :
le tissu non tissé est formé de fibres constituées d'un élastomère thermoplastique ou de fibres contenant un élastomère thermoplastique et une polyoléfine ;
le tissu non tissé a une résistance à la rupture en traction dans la direction longitudinale de la bande (A1) de 20 N/10 mm ou plus, dans laquelle la résistance à la rupture en traction est mesurée comme décrit dans la description, et
la couche de substrat a une épaisseur de 300 à 470 µm, dans laquelle l'épaisseur est mesurée comme décrit dans la description.

2. Bande de liage selon la revendication 1, dans laquelle l'élastomère thermoplastique est au moins l'un choisi dans le groupe constitué par les élastomères thermoplastiques d'oléfine, les élastomères thermoplastiques d'uréthane, les élastomères thermoplastiques à base de styrène, les élastomères thermoplastiques d'ester, et les élastomères thermoplastiques de polyamide.

3. Bande de liage selon l'une quelconque des revendications 1 et 2, dans laquelle le tissu non tissé a une résistance à la traction à la rupture dans la direction longitudinale de la bande (A1) inférieure à 40 N/10 mm, dans laquelle la résistance à la rupture en traction est mesurée comme décrit dans la description.

4. Bande de liage selon l'une quelconque des revendications 1 à 3, dans laquelle le tissu non tissé a une résistance à la traction à la rupture dans la direction transversale de la bande (A2) inférieure à 20 N/10 mm, dans laquelle la résistance à la rupture en traction est mesurée comme décrit dans la description.

5. Bande de liage selon l'une quelconque des revendications 1 à 4, dans laquelle le rapport (A2/A1) de la résistance à la traction à la rupture dans la direction transversale de la bande (A2) du tissu non tissé à la résistance à la traction à la rupture dans la direction longitudinale de la bande (A1) du tissu non tissé est inférieur à 0,8, dans laquelle la résistance à la rupture en traction est mesurée comme décrit dans la description.

6. Bande de liage selon l'une quelconque des revendications 1 à 5, dans laquelle le tissu non tissé a un allongement en traction à la rupture dans la direction longitudinale de la bande (B1) de 100 à 295 %, dans laquelle l'allongement en traction à la rupture est mesuré comme décrit dans la description.

7. Bande de liage selon l'une quelconque des revendications 1 à 6, dans laquelle le tissu non tissé a un allongement en traction à la rupture dans la direction transversale de la bande (B2) de 100 à 400 %, dans laquelle l'allongement en traction à la rupture est mesuré comme décrit dans la description.

8. Bande de liage selon l'une quelconque des revendications 1 à 7, dans laquelle le rapport (B2/B1) de l'allongement en traction à la rupture dans la direction transversale de la bande (B2) du tissu non tissé à l'allongement en traction à la rupture dans la direction longitudinale de la bande (B1) du tissu non tissé est de 0,1 à 2, dans laquelle l'allongement en traction à la rupture est mesuré comme décrit dans la description.

9. Bande de liage selon l'une quelconque des revendications 1 à 8, dans laquelle le tissu non tissé a un module élastique en traction dans la direction longitudinale de la bande (C1) inférieur à 1 MPa, dans lequel le module élastique en traction est mesuré comme décrit dans la description.

10. Bande de liage selon l'une quelconque des revendications 1 à 9, dans laquelle le tissu non tissé a un grammage de 50 à 200 g/m².

11. Bande de liage selon l'une quelconque des revendications 1 à 10, dans laquelle la valeur d'atténuation mesurée par la méthode qui suit pour évaluer les propriétés d'absorption phonique est de 5,5 dB ou plus.
(Méthode pour évaluer les propriétés d'absorption phonique)
La valeur d'atténuation est calculée après un test par la même méthode que pour les "isolants acoustiques" dans la Section 5.5.5 de LV312-1, qui est une norme intégrée chez les constructeurs automobiles allemands. De façon spécifique, une tôle d'aluminium ayant une épaisseur de 0,3 mm et une taille de 350 mm × 190 mm est cintrée sous une forme semi-circulaire de 290 mm de diamètre. Ensuite, une barre d'acier de 8 mm de diamètre est amenée à tomber avec une charge de 0,16 N depuis la position située 20 mm au-dessus de l'apex de la tôle d'aluminium. Le bruit (unité : dB) au choc est mesuré par un microphone disposé 50 mm au-dessus de la position d'impact. En plus du bruit mesuré pour la barre d'acier seule, le bruit est mesuré après qu'une couche d'un échantillon de bande adhésive (taille 25 mm × 50 mm) a été attachée à la position d'impact de la barre d'acier. La différence de bruit est considérée être la valeur d'atténuation.

12. Utilisation d'une bande de liage selon l'une quelconque des revendications 1 à 11 pour un faisceau de câbles.
